# EUROPEAN PATENT SPECIFICATION

(11) **EP 1 892 033 B1**
(45) Date of publication and mention of the grant of the patent: **14.05.2008**
(21) Application number: 06425594.6
(22) Date of filing: 21.08.2006
(51) Int. Cl.: B01F 3/08, B01F 3/10, B01F 5/06, B01F 7/00, B01F 13/00, B01F 13/10, B05C 17/005, A61C 9/00

(54) **Apparatus and method for mixing a multi-component substance for dental castings**
Vorrichtung und Verfahren zum Mischen einer Mehrkomponentenmasse für dentale Gusswerkstücke
Dispositif et procédé pour mélanger une substance à plusieurs composants pour des pièces coulées dentaires

(43) Date of publication of application: 27.02.2008
(73) Proprietor: ZHERMACK S.p.A., I-45021 Badia Polesine (Prov. Rovigo) (IT)
(72) Inventor: Busin, Tiziano c/o Zhermack S.P.A., 45021 Badia Polesine (Rovigo) (IT); Rossi, Massimo c/o Zhermack S.P.A., 45021 Badia Polesine (Rovigo) (IT)
(74) Representative: Ponzellini, Gianmarco

(56) References cited:
- EP-A- 0 603 492
- EP-A- 1 640 060
- EP-A1- 0 132 169
- JP-A- 58 122 029
- US-A- 3 208 958
- US-A- 4 454 087
- US-A- 5 149 720

## Description

The present invention relates to a mixer and in more detail to a mixer that is simultaneously dynamic and static and is suitable for mixing viscoelastic two-component materials for dental castings.

It is known that there are presently on the market and are widely spread, devices that are designed to enable dispensing and mixing of two-component materials suitable for castings of the dental arches of a patient.

In particular, the two constituent materials (base and catalyst) are held in separate containers such as two cylindrical elements of plastic material, for example.

The containers are compatible with a machine enabling suitable dispensing of the materials by acting on pistons, placed at the inside of the containers themselves, by compression.

The mixer is connected to the openings of the containers by means of two inlets formed thereon and the shape of which matches that of the respective openings of said containers, and is also provided with a dispensing duct from which the mixed material is discharged for subsequent uses.

In particular, the mixer consists of a completely hollow body made of plastic material which at an end thereof has said inlets for admission of the base and the catalyst contained in the cylinders.

Inside the mixer there is a mixing chamber in which a rotating element is housed which is provided with suitable fins to enable optimal homogenisation of the base and catalyst.

In particular, the rotating element has an actuating shaft directly connected to the dispensing machine in such a manner that the machine itself can simultaneously urge the materials to the mixer's inlets in the desired amounts and volume ratios and can then drive in rotation the rotating element provided with fins.

The rotation speed of the fins as well as pressure imposed to the materials, and therefore the feeding speed, are such studied that an optimal base-catalyst blend is ensured, which blend therefore comes out of the dispensing outlet in a homogeneous manner.

The prior art briefly described above is illustrated for example in document EP 1274501 B1 or EP 1368113 B1 in the name of 3M ESPE or in the document EP 1 640 060.

The second document mentioned above discloses a dynamic mixer suitable for mixing particularly viscous substances involving use of paths of travel expressly studied for the materials entering the mixing chamber in order to avoid mutual contamination and improve the subsequent mixing. In addition it is important to notice that, when known dynamic mixers are designed to work with particularly viscous materials, the outlet section is increased so as to reduce the flow resistance.

In addition, it is known from document EP 0603492 A1 a device for mixing and distributing materials such as adhesives or sealing agents in which a first "static" component is provided, and in which each of the material components is introduced in a separate condition and distributed, being still kept separate from the other component, at a plurality of points for entry into the true dynamic mixer.

From the inlet region of the dynamic mixer on, the materials start being mixed together by an Archimedean screw driven in rotation around its axis.

Document EP 1029585 A1, on the contrary, shows a general configuration of a mixing device adapted to be alternately used with a static-mixing screw, therefore defining a "static mixer", or with a dynamic rotor within the mixing chamber so as to define a "dynamic mixer".

It is also known, from the document US 3208958, a method and an apparatus for producing plastic foam in which two kind of mixers are used. In particular, it is provided a dynamic mixer for mixing and making homogeneous the components of the plastic introduced within the apparatus and a grid arranged downstream the dynamic mixer, for producing an homogeneous foam.<page 3bis>

As clearly described in the text, the two solutions are to be used alternately and cannot be combined together.

Although the devices briefly described above are presently widespread on the market in a plurality of different versions, the same however have some limits and/or operating drawbacks.

It is in particular to be noted that the dynamic mixers presently known do not always allow optimal mixing of the base and catalyst.

In fact, if the material viscosity, rotational speed of the dynamic element and feeding speed of the material itself within the mixer are not optimised, there is a risk of the material coming out in a non-homogeneously mixed manner thus giving rise, as a result, to subsequent problems during manufacture of the casting of the dental arch.

It is apparent that, once the mixer has been optimised, a change in the viscosity parameters necessarily involves bad mixing of the components and an important reduction in the flow rates if particularly viscous products are used.

Another negative aspect encountered above all with the most viscous products is creation of air bubbles within the mixed mass, which air bubbles result from an incorrect inner geometry.

In addition, the dynamic mixer enables a rather quick passage of the components through the mixing chamber and consequently, in order to obtain the appropriate mixing degree, rather long dynamic mixers are to be made or at all events mixers having a minimum number of mixing fins.

Finally, the sizes of the mixing chamber adversely affect the amount of material remaining within the mixer after use, which material is therefore wasted.

Accordingly, the present invention aims at substantially solving all the above mentioned drawbacks.

It is a first object of the invention to manufacture a mixer for viscoelastic materials to be used in the dental sector, which enables a homogeneous and optimal mixing of base and catalyst.

It is then an aim of the invention to avoid formation of bubbles or other mixing faults inside the mixing chamber and therefore in the discharged material.

A further aim of the invention is to manufacture a mixer enabling satisfactory flow rates to be obtained even with an important increase in the viscosity of the products.

Furthermore, it is necessary that, even when very different viscosity and consistency levels are concerned, the homogeneity of the outgoing product should be always ensured.

Auxiliary objects of the invention involve reduction in the length of the dynamic rotor and/or the number of fins used, without on the other hand adversely affecting the mixer performance.

It is a further auxiliary object to reduce the residual material inside the mixer at the end of the mixer use, thereby reducing wastes.

The invention also aims at achieving lower production costs while at the same time manufacturing a mixer which is compatible with the containers of the materials of the dispensing devices presently on the market.

The foregoing and further aims that will become more apparent in the course of the present description are substantially achieved by a mixer in accordance with the features recited in the appended claims.

Further features and advantages will be best understood from the detailed description of a preferred but not exclusive embodiment of a specific mixer for viscoelastic substances such as components of pastes for dental castings in accordance with the present invention.

This description will be set out hereinafter with reference to the accompanying drawings, given by way of non-limiting example, in which:
- Fig. 1 is a longitudinal section of a mixer in accordance with the present invention;

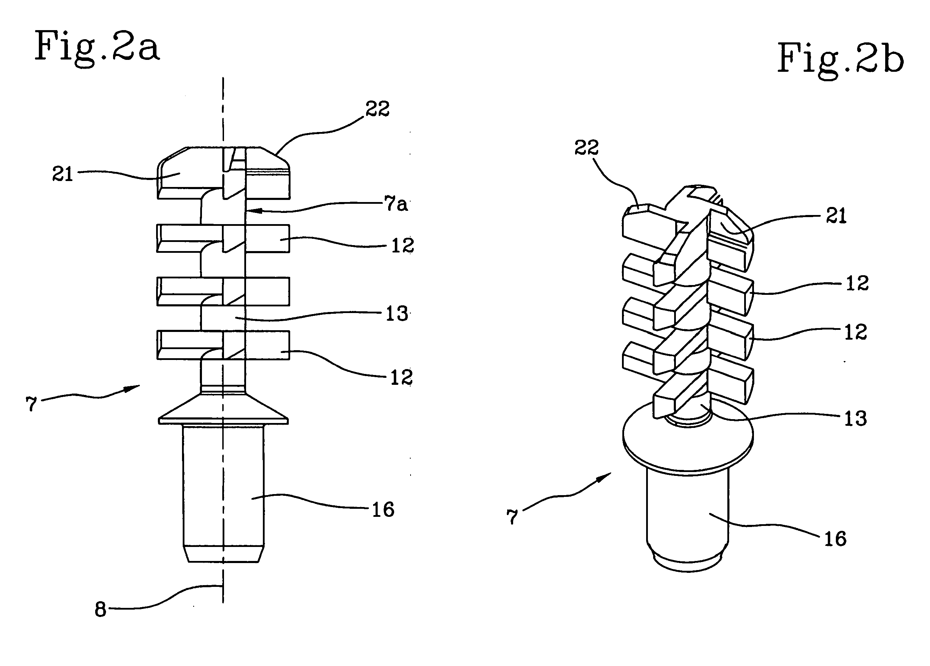

- Figs. 2a and 2b show the dynamic rotor adopted in the device of the invention;
- Figs. 3a, 3b and 3c show the base body of the mixer seen in Fig. 1;

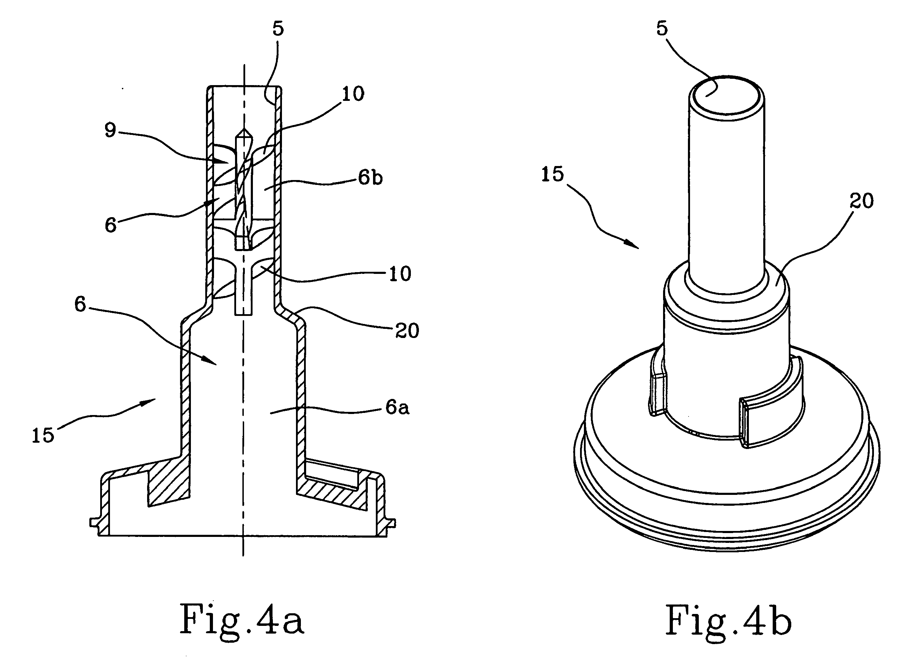

- Figs. 4a and 4b show the outer shell of the mixer seen in Fig. 1;
- Fig. 5 shows an alternative embodiment of a dynamic mixer in accordance with the invention; and
- Fig. 6 shows an alternative embodiment of the base body of the mixer.

With reference to the drawings a mixer particularly adapted to mix viscoelastic substances such as a base and a catalyst being the components of pastes for dental castings has been generally identified with reference numeral 1.

Said mixer consists of a holding body 2 made of generally transparent plastic material and formed with an outer shell 15 and a base body or plate 14 sealingly coupled to the outer shell.

As can be noticed, the base plate 14 has an inlet 3 designed to receive a first component to be mixed and a second inlet 4 designed to receive the second component to be mixed.

In the embodiment shown the two components enter the mixer through the inlets 3, 4 having an axis parallel to the axis 8 of the mixer itself. It is however to be noticed that, alternatively, an inlet with an inclined axis transverse to the symmetry axis 8 can be provided too.

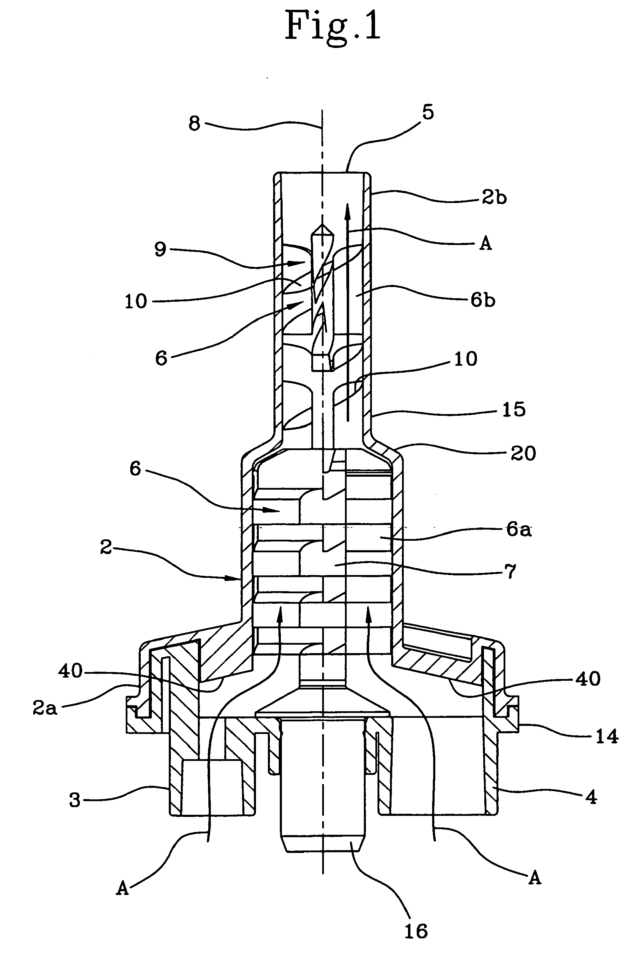

As can be viewed from Fig. 1, the flow of the components is then submitted to a deviation forcing them to enter the mixing chamber with a direction transverse to the rotation axis 8. This deviation is in particular caused by the presence of inclined lower surfaces 40 of the outer shell 15.

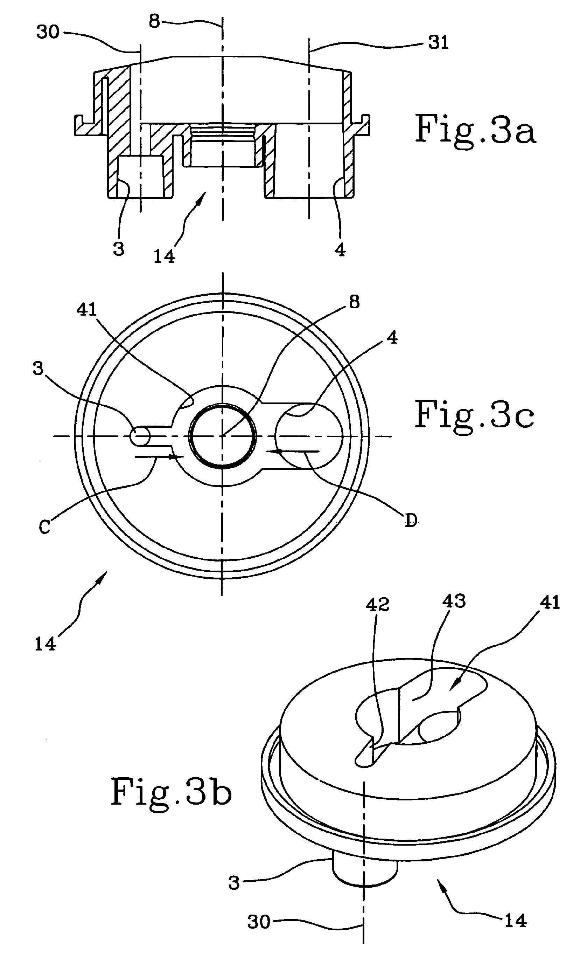

Still from the point of view of the entry directions and looking at Figs. 3b and 3c, it is possible to see that the incoming substances are directed perpendicular to the axis 8 of the mixer in a horizontal plane (directions C, D in Fig. 3c).

In detail, the base plate 14 and outer shell 15 in cooperation define a pre-chamber 41 for entry of the components, which is capable of deviating the incoming flow from parallel to the axis 8 of the mixer to inclined to the axis itself by means of the inclined surfaces 40 and also radially directed (directions C, D) towards the axis itself through suitable shaped ducts 42, 43.

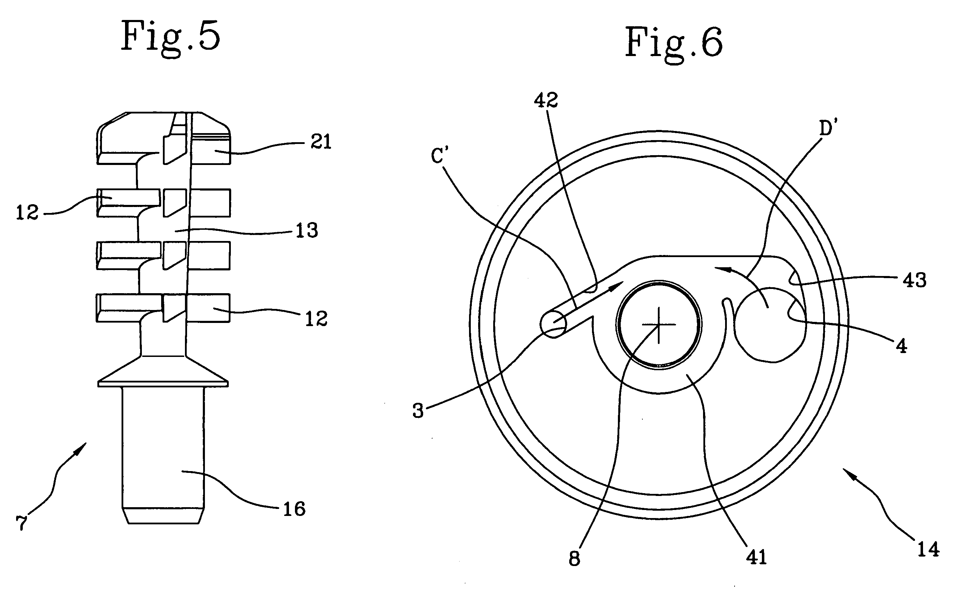

Alternatively (Fig. 6), the shaped ducts 42, 43 can be inclined in the plane so that the two components are directed to the pre-chamber 41 with inclined directions and opposite ways in the plane (directions C¹, D¹); in this manner an improvement in mixing can be obtained which can be useful in particular as far as rather viscous substances are concerned.

It is finally to be noted that the pre-mixing chamber 41 is not concerned with any fin 12 that could incorporate air bubbles during mixing.

At all events, also the embodiment shown in Fig. 6 contemplates direct entry of the materials into the pre-mixing chamber 41 without any delay being involved, but merely making the two flows run in opposite directions.

In this manner better mixing can be ensured under some situations because the materials enter the mixing chamber with optimal flow inclinations and velocities, that are not necessarily parallel to axis 8.

The holding body 2, and in detail the outer shell 15 have a longitudinal extension starting from a first end 2a where the base plate 14 is, as far as an opposite end 2b where an outlet 5 is defined which is adapted to enable the mixed material to go out.

Defined within the holding body 2 is a mixing chamber 6 in which the two components introduced through the inlets 3, 4 are intimately mixed until the desired homogeneity, being then discharged through the outlet 5.

It is possible to see the presence of a dynamic-mixing element 7 a portion 7a of which, made up of the central core 13 and a predetermined number of fins 12 radially emerging therefrom, is positioned movable in rotation around its longitudinal extension axis 8 inside the mixing chamber 6.

For the purpose, the dynamic-mixing element 7 is provided with a shaped lower attachment 16 designed to be engaged by actuating means (a suitable rotating shaft, for example) that can set it in rotation. This actuating means is not shown or further described as it is of a known type presently on the market.

In detail the dynamic-mixing element 7 takes up a first region 6a of the mixing chamber 6 generally having a cylindrical conformation with a constant passage section.

The strictly cylindrical shape of the mixing chamber section however is not binding, but a section having a portion becoming larger or narrower towards the outlet can be also conceived.

In addition, in the embodiment shown there is the presence of a tapering portion 20 (of frustoconical shape) connecting the first region 6a to the second region 6b of the mixing chamber 6.

Within the first region 6a the fins 12 preferably placed at different heights along the extension axis 8 of the mixing element and in a suitable number for each level (in the embodiment shown four fins spaced apart through 90° for each of the four levels), extend from the central core 13 as far as the inner surface of the first region 6a of the mixing chamber so that substantially the whole section is concerned therewith.

In particular, the fins of the rotating shaft are differentiated as follows; a first series has a slender shape, while the end fins 21 are larger and at the upper part thereof have scrapers 22 that nearly touch the inner walls of the tapering portion 20.

Alternatively, adoption of a frustoconical central core 13 becoming larger from the base to the outlet (Fig. 5) can be provided. This involves a further narrowing of the free passage section for the material flowing therethrough. Obviously a frustoconical central core 13 becoming narrower towards the outlet 5 is also possible.

As shown in the accompanying drawings, downstream of the dynamic-mixing element 7 along the feeding direction A of the material there is a further mixing structure of the static type 9 comprising a plurality of shaped elements 10 adapted to enable a further subsequent mixing of the materials before they come out of the mixer.

In particular, the static-mixing structure 9 is placed immediately downstream of the dynamic-mixing element 7 and exactly terminates at the outlet 5.

Said structure 9 is rigidly secured to the holding body and in particular to a second region 6b of the mixing chamber 6.

It is to be pointed out that the second region 6b has an average passage section smaller than the average passage section of the first region 6a. Generally, the second region 6b too will be of cylindrical conformation and will have a constant passage section.

It is also to be pointed out that the static elements 10 of structure 9 define fixed paths for the material flowing through the mixer. These paths are directed transversely of the extension axis 8 of structure 9.

In addition, due to passage of said material through such shaped elements in succession, the material is forced to take directions transverse to each other along the feeding travel.

From a geometric point of view, the elements 10 of the static-mixing structure 9 comprise an Archimedean screw portion in which the surfaces force the material passing therethrough to spin around the mixer axis 8.

If there is more than one Archimedean screw portion, they will be angularly offset through 90°.

Obviously, the number of these elements can be stated depending on the material viscosity, the necessary mixing degree to be obtained, the flow resistance generated by this static mixer and all the other design specifications affecting the choice.

For instance, a mixer can be manufactured which has one to four of said shaped surfaces 10.

After the above description, operation of the mixer in accordance with the invention is as follows.

Each of the two components is forced by a dispensing machine to enter the mixer under pressure, through the first and second inlets 3, 4 having differentiated passage sections so as to obtain the desired volume ratios between the two products at the entry. Here the base and catalyst are submitted to a first mixing step within the first three fourths of chamber 6, said first mixing step being carried out by the dynamic-mixing element rotating around its axis 8. In the remaining fourth, before entering the static mixer, due to the shape of the last mixing fins 21 and the flow resistance caused by the static element, mixing has a further improvement.

The material moves forward from the inlets 3, 4 as far as the outlet 5 due to pressure of the incoming material generated by the dispensing machine.

The material, after being mixed in chamber 6a by the dynamic mixer 7, is forced to pass through the second region 6b of the mixing chamber where the static-mixing structure 9 described above is located, which structure induces a third additional mixing operation. Then the material comes out of the outlet 5 so that it can be used.

The invention achieves important advantages.

It is to be pointed out first of all that adoption of a mixer consisting of a first dynamic portion and a second static portion improves homogeneity of the outgoing material.

In fact, the static portion of the mixer slows down the overall feeding speed of the material that therefore is obliged to remain inside the dynamic-mixing region longer.

Due to the above, the dynamic-mixing element 7 can ensure better homogenisation of the materials without too long lengths and/or too many fins being required.

Besides being a region acting as a "plug", i.e. a region enabling slowing down of the material speed, the static mixer is able to carry out an additional mixing operation that further improves the properties of the outgoing material. Therefore, due to the presence of this static-mixing structure 9, the mixer can also operate with substances of different viscosity and obtain a good mixing degree in all cases.

In addition, in contrast to common beliefs, the end obstruction does not reduce the flow rate if suitable expedients to improve the flow in the other mixer sections are adopted.

The static element introduces an obstruction that, if suitably studied, enables mixing of the dynamic mixer to be improved and optimisation of the mixing operation to be carried out in the final portion of the mixer itself.

Finally, due to the presence of a smaller number of fins of slenderer geometry, heating of the material passing through the mixer is reduced and furthermore, being the mixing chamber of smaller volume, material wastes are reduced too.

## Claims

1. A mixers for viscoelastic two-component materials for dental castings, comprising:
- a holding body (2) which at one end (2a) has at least one inlet (3) for a first component to be mixed and at least one inlet (4) for a second component to be mixed, the holding body (2) further having an outlet (5) disposed to an opposite end (2b) relative to the inlets (3, 4) and in fluid communication with them, the outlet (5) being adapted to enable discharge of the mixed substance, the holding body (2) defining a mixing chamber (6) at the inside thereof;
- a dynamic-mixing element (7) having at least one portion (7a) placed inside the mixing chamber (6) and movable in rotation around its longitudinal extension axis (8) to enable mixing of the two components,
**characterised in that** downstream of the dynamic-mixing element (7) along a material feeding direction (A), there is a static-mixing structure (9) comprising a predetermined number of shaped elements (10) adapted to enable further mixing of the materials before discharge from the mixer.

2. A mixer as claimed in claim 1, **characterised in that** the mixing chamber (6) comprises a first region (6a) adapted to contain the dynamic-mixing element (7) and to allow rotation thereof, and a second region (6b) adapted to contain the static-mixing structure (9), the first region (6a) having an average passage section wider than the average passage section of the second region (6b).

3. A mixer as claimed in claim 2, **characterised in that** the second region (6b) is of cylindrical conformation and has a constant passage section, preferably the first region (6a) too being of cylindrical conformation and having a constant passage section, the two regions (6a, 6b) being mutually connected by a tapering portion (20).

4. A mixer as claimed in anyone of the preceding claims, **characterised in that** the static-mixing structure (9) is rigidly secured to the holding body intercepting the whole passage region of the materials.

5. A mixer as claimed in anyone of the preceding claims, **characterised in that** the shaped elements (10) of the static-mixing structure (9) define fixed paths for the material that are directed transversely of the extension axis (8) of the structure (9), said fixed paths in turn defining mutually transverse directions for the material flowing along the feeding travel of the material itself.

6. A mixer as claimed in anyone of the preceding claims, **characterised in that** the static-mixing structure (9) is placed downstream of the dynamic-mixing element and terminates at the outlet (5).

7. A mixer as claimed in anyone of the preceding claims, **characterised in that** the holding body (2) defines a pre-chamber (41) capable of deviating the flow of the incoming materials from parallel to the axis (8) to inclined through inclined surfaces (40).

8. A mixer as claimed in claim 7, **characterised in that** the pre-chamber (41) has shaped ducts (42, 43) to force the two components to the entry according to opposite directions and ways.

9. A mixer as claimed in anyone of the preceding claims, **characterised in that** the dynamic-mixing element (7) comprises a predetermined number of fins (12) radially emerging from a central core (13), the fins (12) being preferably placed to different heights along the extension axis (8) of the mixing element.

10. A mixer as claimed in anyone of the preceding claims, **characterised in that** the dynamic-mixing element (7) further comprises end fins (21) radially emerging from a central core (13), said end fins (21) having scrapers (22) at their upper part which substantially conform in shape to the inner walls of the tapering portion (20).

11. A mixer as claimed in anyone of the preceding claims, **characterised in that** the dynamic-mixing element (7) comprises a central core (13) of frustoconical conformation preferably having a section becoming larger towards the mixer's outlet (5).

12. A mixer as claimed in anyone of the preceding claims, **characterised in that** the holding body (2) comprises an outer shell (15) and a base plate (14) sealingly coupled to the outer shell (15), the base plate (2) being provided with said inlets (3, 4), which inlets (3, 4) have different entrance sections to enable entry of said first and second components to predetermined volume ratios.

13. A process for mixing viscoelastic two-component materials for dental castings, comprising the following steps:
- introducing the first and second components to be mixed into a mixing chamber (6) through two inlets (3, 4);
- carrying out a first mixing operation through a dynamic-mixing element (7) set in rotation around its axis;
- carrying out a subsequent second mixing operation through a static-mixing structure (9) comprising a predetermined number of shaped elements (10) adapted to promote further mixing of the materials before discharge from the mixer; and
- discharging the homogeneously mixed material from an outlet (5) disposed at an opposite end (2b) relative to the inlets (3, 4).

## Patentansprüche

1. Vorrichtung zum Mischen von viskoelastischen Zweikomponentenmassen für dentale Gusswerkstücke, umfassend:
- ein Gehäuse (2), das an einem seiner eigenen Enden (2a) mindestens eine Eintrittsmündung (3) für eine erste zu vermischende Komponente und mindestens eine Eintrittsmündung (4) für eine zweite zu vermischende Komponente aufweist, wobei das Gehäuse (2) überdies eine Austrittsöffnung (5) aufweist, die an einem gegenüber den Eintrittsmündungen (3, 4) abgewandten Ende (2b) und fluidmäßig mit denselben verbunden angeordnet sind, wobei die Austrittsöffnung (5) den Austritt der vermischen Masse ermöglicht, wobei das Gehäuse (2) im eigenen Innern eine Mischkammer (6) festlegt;
- ein dynamisches Mischelement (7), das mindestens einen eigenen Abschnitt (7a) aufweist, der innerhalb der Mischkammer (6) angeordnet und um die eigene Längsentwicklungsachse (8) drehbeweglich ist, um das Mischen der beiden Komponenten zu erlauben,
**dadurch gekennzeichnet, dass** nach dem dynamischen Mischelement (7) längs einer Vorrückrichtung des Materials (A) ein statischer Mischaufbau (9) anwesend ist, der eine vorgegebene Anzahl von Formelementen (10) umfasst, die das weitere Mischen der Massen vor dem Austritt aus der Vorrichtung zum Mischen erlauben.

2. Vorrichtung zum Mischen nach Anspruch 1, **dadurch gekennzeichnet, dass** die Mischkammer (6) einen ersten Bereich (6a) zur Aufnahme des dynamischen Mischelementes (7) und dessen Drehung und einen zweiten Bereich (6b) zur Aufnahme des statischen Mischaufbaus (9) umfasst, wobei der erste Bereich (6a) einen mittleren Durchtrittsschnitt aufweist, der weiter ist als der durchschnittliche Durchtrittsquerschnitt des zweiten Bereichs (6b) .

3. Vorrichtung zum Mischen nach Anspruch 2, **dadurch gekennzeichnet, dass** der zweite Bereich (6b) eine zylindrische Ausbildung besitzt und einen konstanten Durchtrittsquerschnitt aufweist, wobei bevorzugter Weise auch der erste Bereich (6a) eine zylindrische Ausbildung und einen konstanten Durchtrittsquerschnitt besitzt, wobei die beiden Bereiche (6a, 6b) über einen verjüngten Abschnitt (20) ineinander übergehen.

4. Vorrichtung zum Mischen nach einem beliebigen der vorangegangenen Ansprüche, **dadurch gekennzeichnet, dass** der statische Mischaufbau (9) im Gehäuse unter Auffangen des gesamten Durchtrittsbereiches der Massen starr gehalten ist.

5. Vorrichtung zum Mischen nach einem beliebigen der vorangegangenen Ansprüche, **dadurch gekennzeichnet, dass** der statische Mischaufbau (9) mit dem Gehäuse starr verbunden ist, wobei der gesamte Durchtrittsbereich der Massen aufgefangen wird.

6. Vorrichtung zum Mischen nach einem beliebigen der vorangegangenen Ansprüche, **dadurch gekennzeichnet, dass** die Formelemente (10) des statischen Mischaufbaus (9) Zwangsstrecken für die Masse festlegen, die quer zur Abwicklungsachse (8) des Aufbaus (9) gerichtet sind, wobei die Zwangsstrecken ihrerseits zueinander querliegende Richtungen für die Masse festlegen, die längs des Vorrückweges der Masse selbst fließt.

7. Vorrichtung zum Mischen nach einem beliebigen der vorangegangenen Ansprüche, **dadurch gekennzeichnet, dass** das Gehäuse (2) eine Vorkammer (41) festlegt, die fähig ist, den Massenfluss am Eingang von zur Achse (8) parallel über geneigte Flächen (40) geneigt abzulenken.

8. Vorrichtung zum Mischen nach Anspruch 7, **dadurch gekennzeichnet, dass** die Vorkammer (41) Formleitungen (42, 43) aufweist, um die beiden Komponenten gemäß zueinander gegenüberliegenden Richtungen zu zwängen.

9. Vorrichtung zum Mischen nach einem beliebigen der vorangegangenen Ansprüche, **dadurch gekennzeichnet, dass** das dynamische Mischelement (7) eine vorgegebene Anzahl von Rippen (12) umfasst, die radial von einem mittigen Kern (13) vorstehen, wobei die Rippen (12) bevorzugter Weise an verschiedenen Höhen längs der Abwicklungsachse (8) des Mischelementes angeordnet sind.

10. Vorrichtung zum Mischen nach einem beliebigen der vorangegangenen Ansprüche, **dadurch gekennzeichnet, dass** das dynamische Mischelement (7) überdies Endrippen (21) umfasst, die radial von einem mittigen Kern (13) vorstehen, wobei die Endrippen (21) oben Schaber (22) aufweisen, die im wesentlichen zu den Innenwänden des verjüngten Abschnittes (20) gegenprofiliert sind.

11. Vorrichtung zum Mischen nach einem beliebigen der vorangegangenen Ansprüche, **dadurch gekennzeichnet, dass** das dynamische Mischelement (7) einen mittigen Kern (13) kegelstumpfförmiger Form, bevorzugter Weise mit in Richtung des Austritts (5) der Vorrichtung zum Mischen wachsenden Querschnitt umfasst.

12. Vorrichtung zum Mischen nach einem beliebigen der vorangegangenen Ansprüche, **dadurch gekennzeichnet, dass** das Gehäuse (2) eine Außenschale (15) und eine mit der Außenschale (15) abgedichtet gekoppelte Basisplatte (14) umfasst, wobei die Basisplatte (14) die Eintrittsmündungen (3, 4) aufweist, wobei die Eintrittsmündungen (3, 4) einen verschiedenen Eintrittsquerschnitt besitzen, um den Eintritt der ersten und der zweiten Komponente mit vorgegebenen volumetrischen Verhältnissen zu erlauben.

13. Verfahren zum Mischen von viskoelastischen Zweikomponentenmassen für dentale Gusswerkstücke, umfassend die folgenden Schritte:
- Eingeben in eine Mischkammer (6) über zwei Eintrittsmündungen (3, 4), der ersten und der zweiten zu vermischenden Komponente;
- Durchführen einer ersten Mischung über ein dynamisches Mischelement (7), das um die eigene Achse drehbar ist;
- Einleiten einer nachfolgenden, zweiten Mischung über einen statischen Mischaufbau (9), der eine vorgegebene Anzahl von Formelementen (10) umfasst, die eine weitere Mischung der Massen vor dem Austritt aus der Vorrichtung zum Mischen begünstigen; und
- Ausbringen der homogen gemischten Masse aus einer Austrittsöffnung (5), die an einem Ende angeordnet ist, die gegenüber den Eintrittsmündungen (3, 4) abgewandt (2b) ist.

## Revendications

1. Dispositif pour mélanger des matériaux viscoélastiques à deux composants pour des pièces coulées dentaires, comprenant:
- un corps de logement (2) ayant, à l'une (2a) de ses extrémités, au moins une bouche d'entrée (3) pour un premier composant à mélanger et au moins une bouche d'entrée (4) pour un deuxième composant à mélanger, le corps de logement (2) ayant en outre une bouche de sortie (5) disposée à une extrémité opposée (2b) par rapport aux bouches d'entrée (3, 4) et en communication de fluide avec ces dernières, la bouche de sortie (5) étant apte à permettre le déchargement de la substance mélangée, le corps de logement (2) définissant à son intérieur une chambre de brassage (6);
- un élément pour le mélange dynamique (7) ayant au moins une portion (7a) placée à l'intérieur de la chambre de brassage (6) et mobile en rotation autour de son axe de développement longitudinal (8) pour permettre le mélange des deux composants,
**caractérisé en ce qu'**à l'aval de l'élément pour le mélange dynamique (7) le long d'une direction d'alimentation (A) du matériau, il y a une structure pour le mélange statique (9) comprenant un nombre prédéterminé d'éléments façonnés (10) aptes à permettre un autre mélange des matériaux avant que le dispositif pour mélanger effectue le déchargement.

2. Dispositif pour mélanger selon la revendication 1, **caractérisé en ce que** la chambre de brassage (6) comprend une première zone (6a) apte à contenir l'élément pour le mélange dynamique (7) et à permettre sa rotation, et une deuxième zone (6b) apte à contenir la structure pour le mélange statique (9), la première zone (6a) ayant une section moyenne de passage plus large que la section moyenne de passage de la deuxième zone (6b).

3. Dispositif pour mélanger selon la revendication 2, **caractérisé en ce que** la deuxième zone (6b) est de conformation cylindrique et a une section de passage constante, de préférence également la première zone (6a) étant de conformation cylindrique et ayant une section de passage constante, les deux zones (6a, 6b) étant reliées réciproquement par une portion à section décroissante (20).

4. Dispositif pour mélanger selon l'une quelconque des revendications précédentes, **caractérisé en ce que** la structure pour le mélange statique (9) est fixée rigidement au corps de logement interceptant toute la zone de passage des matériaux.

5. Dispositif pour mélanger selon l'une quelconque des revendications précédentes, **caractérisé en ce que** les éléments façonnés (10) de la structure pour le mélange statique (9) définissent des parcours fixes pour le matériau lesquels sont dirigés transversalement à l'axe de développement (8) de la structure (9), lesdits parcours fixes à leur tour définissant des directions réciproquement transversales pour le matériau défilant le long du parcours d'alimentation du matériau lui-même.

6. Dispositif pour mélanger selon l'une quelconque des revendications précédentes, **caractérisé en ce que** la structure pour le mélange statique (9) est mise à l'aval de l'élément pour le mélange dynamique et se termine à la bouche de sortie (5).

7. Dispositif pour mélanger selon l'une quelconque des revendications précédentes, **caractérisé en ce que** le corps de logement (2) définit une préchambre (41) capable de dévier l'écoulement des matériaux à l'entrée, cet écoulement passant de parallèle à l'axe (8) à incliné, par l'intermédiaire de surfaces inclinées (40).

8. Dispositif pour mélanger selon la revendication 7, **caractérisé en ce que** la préchambre (41) a des conduits façonnés (42, 43) pour forcer les deux composants à l'entrée selon deux directions et sens opposés.

9. Dispositif pour mélanger selon l'une quelconque des revendications précédentes, **caractérisé en ce que** l'élément pour le mélange dynamique (7) comprend un nombre prédéterminé d'ailettes (12) faisant saillie en sens radial d'un noyau central (13), les ailettes (12) étant de préférence placées à des hauteurs différentes le long de l'axe de développement (8) de l'élément de mélange.

10. Dispositif pour mélanger selon l'une quelconque des revendications précédentes, **caractérisé en ce que** l'élément pour le mélange dynamique (7) comprend en outre des ailettes d'extrémité (21) faisant saillie en sens radial d'un noyau centrale (13), lesdites ailettes d'extrémité (21) ayant à leur partie supérieure des éléments de raclage (22) épousant essentiellement la forme des parois intérieures de la portion à section décroissante (20).

11. Dispositif pour mélanger selon l'une quelconque des revendications précédentes, **caractérisé en ce que** l'élément pour le mélange dynamique (7) comprend un noyau central (13) de conformation tronconique ayant de préférence une section devenant plus large vers la bouche de sortie (5) du dispositif pour mélanger.

12. Dispositif pour mélanger selon l'une quelconque des revendications précédentes, **caractérisé en ce que** le corps de logement (2) comprend une coque extérieure (15) et une plaque de base (14) couplée à la coque extérieure (15), la plaque de base (14) étant munie desdites bouches d'entrée (3, 4), ces bouches (3, 4) ayant des sections d'entrée différentes pour permettre l'entrée desdits premier et deuxième composants à des rapports volumétriques prédéterminés.

13. Procédé pour mélanger des matériaux viscoélastiques à deux composants pour des pièces coulées dentaires, comprenant les étapes suivantes:
- introduction d'un premier et d'un deuxième composant à mélanger dans une chambre de brassage (6) à travers deux bouches d'entrée (3, 4);
- exécution d'une première opération de mélange à travers un élément pour le mélange dynamique (7) mis en rotation autour de son axe;
- exécution d'une deuxième opération de mélange suivante à travers une structure pour le mélange statique (9) comprenant un nombre prédéterminé d'éléments façonnés (10) aptes à favoriser un autre mélange des matériaux avant leur déchargement du dispositif pour mélanger; et
- déchargement du matériau mélangé d'une façon homogène, d'une bouche de sortie (5) disposée à une extrémité opposée (2a) par rapport aux bouches d'entrée (3, 4).
